(19)

Europäisches
Patentamt
European
Patent Office
Office européen
des brevets

(11) **EP 3 816 491 A2**

(12) **EUROPEAN PATENT APPLICATION**
published in accordance with Art. 153(4) EPC

(43) Date of publication:
**05.05.2021 Bulletin 2021/18**

(21) Application number: **19837497.7**

(22) Date of filing: **26.08.2019**

(51) Int Cl.:
**F16J 15/34** *(2006.01)*

(86) International application number:
**PCT/RU2019/000596**

(87) International publication number:
**WO 2020/018001 (23.01.2020 Gazette 2020/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.06.2018 RU 2018123425**

(71) Applicants:
• **Joint Stock Company
"Central Design Bureau of Machine Building"
St.Peterburg 190020 (RU)**
• **Science and Innovations - Nuclear Industry
Scientific Development, Private Enterprise
Moscow, 119017 (RU)**

(72) Inventors:
• **SHUTSKIY, Sergey Yur'evich
St.Petersburg, 197227 (RU)**

• **PLAKIDIN, Aleksandr Nikolaevich
St.Petersburg, 197375 (RU)**
• **KAZANTSEV, Rodion Petrovich
St.Petersburg, 194356 (RU)**
• **BYKOV, Aleksandr Nikolaevich
St.Petersburg, 196240 (RU)**
• **GORONKOV, Andrey Vladimirovich
St.Petersburg, 194352 (RU)**
• **VORONOV, Timur Dmitrievich
Leningradskaya obl., der. Mistolovo, 188660 (RU)**

(74) Representative: **Friese Goeden Patentanwälte
PartGmbB
Widenmayerstraße 49
80538 München (DE)**

Remarks:
A request for restoration of the right of priority under
Rule 49ter.2 PCT is pending before the EPO as
designated Office.

(54) **ELEMENT OF A FRICTION PAIR OF A FACE SEAL**

(57) The invention falls within the machine-building domain, that is, to mechanical seals for rotary shafts. The tribological components are used in the mechanical seals of impeller pumps for the NPP, predominantly of the reactor coolant pump set (RCPS), and electrically driven feedwater and auxiliary electrically driven feedwater pumps (FWP, AFWP). A closed-loop contact belt with constant across the width and variable across the radius profile has been executed on the stationary O-ring. Besides the width of the contact bearing is equal to half the width of the contact area of the O-rings, and the circularly symmetric profile of the contact bearing represents adjoining wavy line located between the concentric circles restricting the contact area of O-rings. The profile is ex-ecuted on the condition of equality of the relevant radii of the circles generated by two adjoining arcs of parallel wavy lines in each sector of the circularly symmetrical profile of the contact bearing, where the centers of the wave generating circles are located on the lines limiting this sector and passing through the center of the stationary O-ring, outside the area limited by concentric circles. The ratio of outer and inner diameters of the concentric circles is equal to 1.25. The technical result consists in reduction of the swelling parameters of the contact bearing for the tribological components and in increase of its wear resistance. 2 figures

EP 3 816 491 A2

1

3

2

4

Fig. 1

**EP 3 816 491 A2**

**Description**

The invention falls within the machine-building domain, that is, to mechanical seals for rotary shafts. The tribological components are used in the mechanical seals of impeller pumps for NPPs, predominantly of the reactor coolant pump set (RCPS), and electrically driven feedwater and auxiliary electrically driven feedwater pumps (FWP, AFWP).

The design of the tribological component in the "Mechanical Seal" is known (Patent 2056559, F16J15/34, published on 20.03.1996), it is the friction couple stationary ring, where a bearing is executed on its end surface in the form of axially symmetrical shaped axial ledge, besides the internal and external lateral surfaces of the axial ledge are formed by the two arcs of equal radius, the centers thereof are situated on two mutually perpendicular planes passing through the axis of the stationary friction ring symmetrically with respect to the latter, and in addition the centers of the arc radii, which form the internal lateral surface, are displaced from the axis of the friction ring to this surface, and other centers - to the contrary. Besides all the centers of the arc radii are situated on the circle, the diameter thereof is no less than the maximum ledge width.

The disadvantage of this design is the complexity of executing the geometry of the bearing shape formed by the two arcs; the centers thereof are located on two mutually perpendicular planes. Besides the bearing form is of non-uniform width and irregular shape, and the reliability of the mechanical seal depends considerably on the uniformly executed width of the contact surface of the friction couple rings and bearing profile.

The closest by technical essence and achieved results to the claimed technical solution is the design of the friction couple "Mechanical seal for the reactor coolant pump set of nuclear power plants" Patent SU No. 1162279, F16J 15/34, published on 15.06.1993) non-rotating O-ring installed in the static barrel, spring-loaded to the rotating O-ring of the traveling-barrel. The non-rotating O-ring is executed with constant across the width and variable across the radius axisymmetric profile of the closed bearing, the end thereof contacts with the transannular ring surface. The width of the bearing is given as equal to half the width of its contact area with transannular ring surface, and profile of the bearing is limited by the adjoining wavy lines generated by the axisymmetric profile arranged between the concentric circles limiting the contact area of the rings.

Due to the fact that the geometry of the bearing form is described by wave-shaped generators, limited only by the outer and inner diameters of the ring, hence the disadvantage is that the given restrictions are not sufficient for executing the optimum shape of the bearing. Moreover the execution of the bearing profile insufficiently smooth shall lead to the concentration of local stresses at the bearing edge due to nonlinear distribution of pressure in the gap that appropriately shall lead to the nonuniformity of the specific loading across the width of the contact surface and embrittlement of the bearing.

The basic task of the invention is the further improvement of the geometry of tribological component of mechanical seal on simultaneous reliability enhancement of the tribological component of mechanical seal and improvement of its operation endurance.

It is suggested to have the wavy lines generating the contact bearing profile line of the known design tribological component of mechanical seal to supplement with the design restrictions for resolving the set task for the purpose of optimization.

According to the known design of the friction couple on the stationary O-ring (counterpart of the friction couple) the closed contact bearing has been manufactured, the end thereof is designed for contact with the surface of the facing O-ring. The contact bearing is executed with circularly symmetrical profile constant across the width and variable across the radius. The contact bearing profile is generated by the conjugation of wavy lines arranged between the concentric circles limiting the contact area of the O-rings. Moreover the width of the contact bearing is given as equal to half the width of the area limited by these concentric circles.

The first proposed design restriction is the condition of equality of the relevant radii of the circles generated by two adjoining arcs of parallel wavy lines in each sector of the circularly symmetrical profile of the contact bearing, where the centers of the wave generating circles are located on the lines limiting this sector and passing through the center of the stationary O-ring, outside the area limited by the concentric circles. Besides the crest of the wavy profile must touch the external concentric circle of the contact area of O-rings and the trough of the wavy profile must touch the inner concentric circle.

The second design restriction is the ratio of diameters of the concentric circles limiting the contact area of the O-rings in the mechanical seal, i.e. ratio of outer D and inner d diameters as D/d = 1.25.

The assumed execution of the contact bearing profile line with additional design restrictions on the friction couple element of the O-ring, based on experimental investigations is optimal.

The technical result consists in reduction of the embrittlement indices of the contact bearing on the stationary O-ring (friction couple element) and in increase of its wear resistance.

The technical result shall be achieved due to execution of the optimum form contact bearing profile line that makes the profile optimum smooth and thereby the concentrations of local stresses at the edge of the contact bearing

3

are reduced.

When using this invention the reliability enhancement of the friction pair of mechanical seal and increase of the life parameters of its operation are achieved.

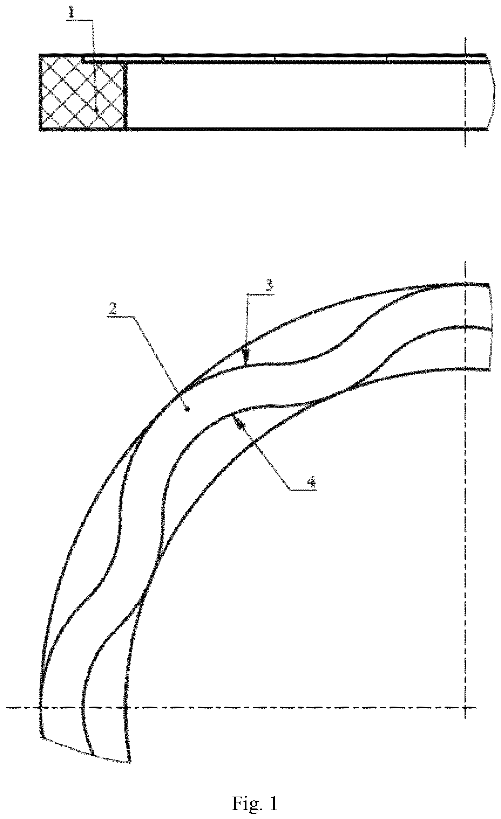

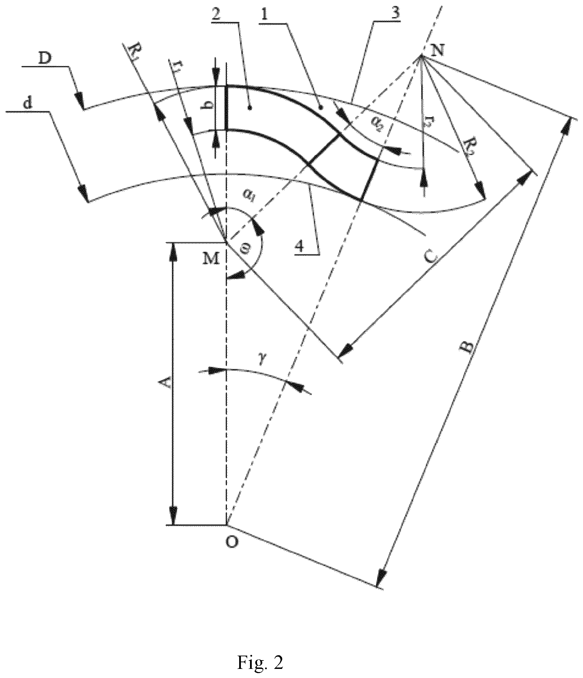

The essence of the current invention is explained by the drawings given in Fig. 1 and Fig. 2:

Fig. 1 - tribological element (stationary mechanical seal) with the proposed form of circularly symmetric contact bearing;
Fig. 2 - stationary mechanical seal sector.

Mechanical seal tribological element (Fig. 1) executed in the form of non-rotating mechanical seal 1 with ledge viz. contact bearing 2 with wavy profile. The external 3 and internal 4 lateral surfaces of the contact bearing 2 (parallel wavy lines) have been generated by the interconnected arcs (Fig. 2) with the radii $R_1$ and $r_2$ and respectively $r_1$ and $R_2$ in each sector of the circularly symmetric profile. Besides the centers of these radii M and N are situated on the lines limiting the sector and passing through the center of the stationary O-ring 1 (O) outside the contact area of the O-ring in the friction couple. The contact area is limited by the external and internal concentric circles with outer D and inner d diameters respectively. The ratio of outer diameter D and inner diameter d of the concentric circles is equal to 1.25. Moreover the contact bearing 2 is manufactured with constant width and equal to the half the width of the area limited by these concentric circles.

Due to the fact that the contact bearing 2 is concentrically symmetrical, one of the sectors limited by the angle $\gamma$ on which the contact bearing 2 is equally divided is given in Fig. 2. In the sector that part of the external 3 lateral surface of the contact bearing 2, which is the wave crest, is executed as adjoining to the circle with outer diameter D, and that part of inner 4 lateral surface of the contact bearing 2 which is the trough of the wave is executed as adjoining to the circle with inner diameter d. Thus the angle $\gamma$ is the central angle of each repeating sector of the contact bearing 2 wavy profile and is equal to

$$\gamma = 360°/n,$$

where n - radial pitch of the contact bearing 2 profile radii change, equal to the number of sectors of the contact bearing 2 equal between each other by area and is an even number from the condition of compliance with the axial symmetry.

It is expedient that the value n was selected from the optimum series of numbers: 6, 10, 12, 18 considering the terms of axial symmetry and common wisdom.

The centers for plotting circles forming two conjugated arcs of each wavy profile line of the contact bearing 2 in one sector are located outside the area limited by concentric circles with outer D and inner d diameters.

On the grounds that the manufacture of the friction couple element of the mechanical seal is executed in turn-mill machining NC machine tool, the selection and calculation of the basic parameters for plotting the profile line of the friction couple element of the mechanical seal required for programming the movement trajectory of the lathe tools is executed in the following sequence.

The minimum contact area of the O-rings in the mechanical seal friction couple has been calculated in advance, which is the contact bearing 2 area with wavy profile. It is determined by calculation based on the conditions of operation of the mechanical seal such as operating medium pressure, rpm, friction couple materials etc. The requirement for assuring sufficiency of the contact surface area for preventing leakages on the one part and necessity of assuring minimum friction with the other lies at the base of the area determination.

Based on the design features of the pump set, in particular the diameter of the pump shaft, outer diameter D and inner diameter d of the stationary O-ring 1, respectively the concentric circles, restricting the contact area were assigned during the design. Besides the circle with outer diameter D restricts the external 3 lateral surface of the contact bearing 2, and the circle with inner d diameter restricts the inner 4 lateral surface of the contact bearing 2. Moreover, from the view point of design of the mechanical seal the internal diameter d was determined as one of the first parameters since it directly depends on the sizes of the pump shaft.

The ratio of the diameters of concentric circles limiting the area of contact of the O-rings in the mechanical seal is assigned. It was experimentally established that it is expedient to use the ratio of the outer D and inner d diameters as D/d = 1.25. The ratio of diameters has been selected based on the principle of retaining the area of the contact bearing at any version of the stationary O-ring. Increase of the ratio value shall lead to increase of the value of contact bearing 2 area and reduction of the radial pitch of contact bearing 2 profile radii change. In this regard the area of non-contact areas on the stationary O-ring 1 shall increase. In cases when the value of the ratio is less than 1.25, the contact bearing 2 area shall decrease, following which for maintaining the given nominal contact area of the O-rings it is required to increase the inner d diameter or increase the radial pitch of the contact bearing profile radii change. The increase in value of the inner diameter shall lead to forced over dimension of the stationary O-ring 1, and an increase of the number of sectors of the contact bearing 2 shall lead to reduction of the area of non-contact areas, actually tending the wavy profile of the contact bearing 2 to a circle. Thus the value of ratio 1.25 is optimal from the point of view of the ratio of waviness height of contact bearing 2 profile, number of repeating sectors and dimensions of the stationary O-ring 1, wherein the optimum consumption of the friction couple material is attained.

The equality of the relevant radii of circles forming the two conjugate arcs of parallel wavy lines in each sector of the contact bearing 2 circularly symmetrical profile is mandatory.

Correspondingly the plotting radius $R_p$ for the contact bearing 2 generating the arc being the pitch of the wavy lines of the contact bearing 2 profile; is equal to:

$$R_p = R_1 = R_2, \qquad\qquad (1)$$

, and the plotting radius $r_p$, forming the arc being the trough of the wavy profile line of the contact bearing 2, is equal to:

$$r_p = r_1 = r_2.$$

Where

$$r_p = R_p - b, \qquad\qquad (2)$$

where b - width of the contact bearing 2.

The plotting radius $R_p$ for the contact bearing 2 is the basic parameter for calculation of the coordinates of the address point (coordinates of the trajectory of support points for the given parameters) of the contact bearing 2 profile line by the system of numerical control of machine tool.

Knowing the value of outer D and inner d diameters of the stationary O-ring 1, the value of plotting radius $R_p$ shall be found for the contact bearing 2. For this purpose the sector of stationary O-ring 1 and triangle OMN (Fig. 2) generated by the center of stationary O-ring 1 (O) and centers of plotting circles, forming two conjugate arcs of each wavy line-profile line of the contact bearing 2 (M and N) is considered.

The following notations are accepted:

- side OM (A) - straight line connecting the center of the stationary O-ring 1 and center of the radii generating a part of the wavy profile ring of contact bearing 2 in the sector adjoining the external D diameter of the stationary O-ring 1;
- side ON (A) - straight line connecting the center of the stationary O-ring 1 and center of the radii generating a part of the wavy profile ring of contact bearing 2 in the sector adjoining the internal d diameter of the stationary O-ring 1;
- $\gamma$ - angle between the straight lines OM and ON, where $\gamma = 360°/n$;
- side MN (C) is equal to the sum of radii $R_p$ and $r_p$.

From the condition that the width b of the contact bearing 2 is equal to half the width of the contact area, it follows that:

$$b = (D - d)/4,$$

where D and d - respectively outer D and inner d diameters of concentric circles, limiting the contact area.

According to the theorem of cosines:

$$C^2 = B^2 + A^2 - 2BA\cos\gamma \ , \qquad\qquad (3)$$

and considering that

$$A = D/2 - R_p,$$

$$B = d/2 + R_p,$$

$$C = R_p + (R_p - (D - d)/4) = 2\,R_p - (D - d)/4,$$

then

$$(2\,R_p - (D - d)/4)^2 = (D/2 - R_p)^2 + (d/2 + R_p)^2 - 2(D/2 - R_p)(d/2 + R_p)\cos\gamma \quad . \quad (4)$$

Denoting $\cos\gamma$ through k, the quadratic equation is obtained

$$2(1 - k)\,R_p^2 + k\,(D - d)R_p + (0.5k - 0.125)Dd - 0.1875(D^2 + d^2) = 0. \quad (5)$$

Now the value of the first n is given.

For example, n = 18. Respectively $\gamma = 20°$ and $\cos 20° = k = 0.9397$.

Since the values of the outer D and inner d diameters are known to us and given by their ratio D=1.25d, the value of radius $R_p$ shall be found as the root of the quadratic equation:

$$Rp = \frac{-k\dfrac{0{,}25d}{2} \pm \sqrt{\left(k\dfrac{0{,}25d}{2}\right)^2 - 2(1 - k)(0{,}5k - 0{,}125)1{,}25d^2 - 0{,}1875(2{,}5625d^2)}}{2(1 - k)} \quad (6)$$

Then $r_p$ is calculated according to the formula (2).

Thereafter the value of the central angle $\alpha_2$ of the part of the wavy profile ring of the contact bearing 2, touching the inner diameter of the stationary ring 1 in the sector which may be found according to the cosine theorem:

$$A^2 = B^2 + C^2 - 2BC\cos\alpha_2.$$

Taking into consideration that the value of the central angle $\alpha_1$ of another part of the wavy profile ring of the contact bearing 2 touching the outer D diameter of the stationary O-ring 1 in the sector can be found from the system of equations:

$$\begin{cases} \omega = 180° - \alpha_2 - \gamma \\ \alpha_1 = 180° - \omega \end{cases} \quad (7)$$

from where

$$\alpha_1 = \alpha_2 + \gamma.$$

Then the contact bearing 2 area shall be calculated for the first n according to the formula:

$$S = n \cdot \pi \cdot \frac{\alpha_1 + \alpha_2}{360°} \cdot \left(2Rp - \frac{D - d}{4}\right) \cdot \left(\frac{D - d}{4}\right), \quad (8)$$

then

$$S = n \cdot \pi \cdot \frac{2\alpha_2 + \gamma}{360°} \cdot \left(2Rp - \frac{D-d}{4}\right) \cdot \left(\frac{D-d}{4}\right) =$$

$$= n \cdot \pi \cdot \frac{2\alpha_2 + \gamma}{360°} \cdot \left(2Rp - \frac{0,25d}{4}\right) \cdot \left(\frac{0,25d}{4}\right). \qquad (9)$$

The obtained value of contact bearing 2 area for the first n shall be compared with the given value of the nominal area of contact bearing 2, determining how near thereto as it is to it.

The above described calculation is repeated for the next n by selecting n to greater or lesser until the values of the areas do not coincide to the maximum that shall allow determine the required number of sectors. The optimum n shall be determined by approximation of the calculated area to the nominal area viz. radial pitch of radii change of the contact bearing radii for which the plotting radii of wave lines $R_p$ and $r_p$ have already been calculated.

The contact bearing profile line executed with such design restrictions on the non-rotating ring makes the form of tribological component of the mechanical seal optimum that allows significantly reduce the swelling indices of the tribological component and increase wear resistance, respectively enhance reliability, efficiency and fatigue life expenditure of the mechanical seal.

## Claims

1. An element of a friction pair of a face seal executed in the form of O-ring with circularly symmetric profile constant across the width and varying across the radius designed for contact with the surface lying opposite to the O-ring, besides the width of the contact bearing is equal to half the width of the contact area limited by the concentric circles, and the circularly symmetric profile of the contact bearing is formed by the conjugation with the wave lines arranged between these concentric circles limiting the contact area of O-rings, and **characterized by**
the wave lines generating the contact bearing profile line have been executed with the condition of equality of the relevant radii of circles forming two conjugating arc of parallel wave lines in each sector of the contact belt circularly symmetric profile, besides the centers of the wave generating circles are located on the lines restricting each sector and passing through the center of stationary O-ring, outside the area restricted by concentric circles, and where each wavy profile crest is executed touching the outer concentric circle of the O-ring contact area, and each wave trough of the wavy profile touching the inner concentric circle, and on the ratio of outer and inner diameters of the concentric circles restricting the contact area of O-rings in the mechanical seal equal to 1.25,
besides the main parameter for construction of the contact bearing profile circuit is calculated using the formula

$$\text{Rp} = \frac{-k\frac{0,25d}{2} \pm \sqrt{\left(k\frac{0,25d}{2}\right)^2 - 2(1-k)(0,5k - 0,125)1,25d^2 - 0,1875(2,5625d^2)}}{2(1-k)}$$

, and contact area of the mechanical seal according to the formula

$$S = n \cdot \pi \cdot \frac{2\alpha_{(2)} + \gamma}{360°} \cdot \left(2Rp - \frac{0,25d}{4}\right) \cdot \left(\frac{0,25d}{4}\right)$$

where $R_p$ - plotting radius for the contact bearing generating the arc being the pitch of the wavy lines of the contact bearing profile;
k - cos(y);
d - diameter of concentric circle restricting the contact area of the O-rings in the friction couple on the inner side being simultaneously inner diameter of the stationary O-ring;
n - radial pitch of the contact bearing profile radii change, optimum value thereof is determined by the selection by approximation of relevant value of the calculated area to the value of the nominal area of the contact belt;
$\alpha_{(2)}$ - central angle of the part of the contact bearing wavy profile part of the ring related to the inner diameter of the stationary O-ring in the sector;
$\gamma$ - central angle of the contact bearing wavy profile sector.

Fig. 1

Fig. 2

**REFERENCES CITED IN THE DESCRIPTION**

**Patent documents cited in the description**

- SU 2056559
- SU 1162279